# EUROPEAN PATENT SPECIFICATION

(11) **EP 1 785 296 B1**
(45) Date of publication and mention of the grant of the patent: **23.09.2009**
(21) Application number: 05770412.4
(22) Date of filing: 11.08.2005
(51) Int. Cl.: B60H 1/00

(54) **AIR CONDITIONER**
KLIMAANLAGE
CLIMATISEUR

(30) Priority: 02.09.2004 JP 2004255880
(43) Date of publication of application: 16.05.2007
(73) Proprietor: Sanden Corporation, Isesaki-shi, Gunma 372-8502 (JP)
(72) Inventor: KAWASAKI, Masatoshi, Gunma 372-8502 (JP)
(74) Representative: Feldmeier, Jürgen
(86) International application number: PCT/JP2005/014766
(87) International publication number: WO 2006/025204

(56) References cited:
- DE-A1- 2 655 554
- GB-A- 2 036 299
- JP-A- 11 189 025
- JP-A- 2000 168 337
- JP-A- 2000 168 337
- US-A- 4 844 150
- US-A- 5 399 121

## Description

### TECHNICAL FIELD

The present invention relates to an air conditioner, and more specifically to an air conditioner suitable for a vehicle and a construction machine.

### BACKGROUND ART

An air conditioner of an airmix type, which is suitable for a vehicle and a construction machine, has an air-conditioning unit in an occupant compartment as disclosed, for example, in Unexamined Japanese Patent Application Publication No. 2000-168337. In the housing of the air-conditioning unit, there is formed an inner duct leading to an air outlet to a vehicle compartment. Also built in the housing is an evaporator that refrigerates the air flowing into the inner duct in case of necessity and produces the air into a primary conditioned airflow. A heater core is disposed in the downstream of the evaporator so as to partially occupy the sectional area of the inner duct. The heater core is capable of generating a secondary conditioned airflow by heating the primary conditioned airflow. Airmix doors are set in the immediate upstream and immediate downstream of the heater core. The generation amount of the secondary conditioned airflow can be controlled by opening/closing these airmix doors. To be concrete, during the maximum cooling, the airmix doors are both closed, and all the primary conditioned airflow bypasses the heater core and runs to the air outlet. By contrast, during the maximum heating, the airmix doors are fully opened, and all the primary conditioned airflow is heated by the heater core to turn into the secondary conditioned airflow. During the intervening time between the maximum cooling and the maximum heating, the airmix doors are half opened. As a result, the primary conditioned airflow that has bypassed the heater core joins with the secondary conditioned airflow that has been heated by the heater core in the downstream of the heater core.

Some of the air conditioners of this type have an airmix wall that is arranged in the downstream of the heater core so as to block the flow of the secondary conditioned airflow for the purpose of thoroughly mixing the primary and secondary conditioned airflows.

According to the well-known air conditioner mentioned above, however, during the maximum cooling, part of the primary conditioned airflow that has bypassed becomes a separated flow in the immediate downstream of the heater core and flows around to reach the rear of the heater core. The generation and flowing-around of the separated flow hamper the smooth circulation of the primary conditioned airflow and cause the increase of circulation resistance of the inner duct. This creates the problem that a wind amount from the air outlet decreases, which incurs degradation of cooling capacity that is required during the maximum cooling. Although the airmix wall exerts the function of preventing the separated flow from flowing around to reach the rear of the heater core, this function is neither adequate nor capable of preventing the generation of the separated flow itself.

### DISCLOSURE OF THE INVENTION

It is an object of the present invention to provide an air conditioner that prevents a separated flow from generating near a heater core during maximum cooling and is improved in cooling capacity.

In order to accomplish the above-mentioned object an air conditioner according to claim 1 is provided. The air conditioner has an air-conditioning housing including an inner duct and housing an evaporator for making air into a primary conditioned airflow in the inner duct flowing downstream; a heater core so disposed as to partially occupy duct cross sectional area of the inner duct in the downstream of the evaporator for producing a secondary conditioned airflow obtained by heating the primary conditioned airflow in the inner duct along with passing of the primary conditioned airflow, and allowing the primary conditioned airflow to bypass; an upstream damper set in an immediate upstream of the heater core and is adapted to be opened and closed to control passing rate of the primary conditioned airflow with respect to the heater core; a guide wall arranged in the downstream of the heater core and forming a first zone in a downstream area of the heater core, the first zone allowing free passing of the primary conditioned airflow having bypassed the heater core, and a second zone in between the guide wall and the heater core; and a downstream damper disposed in between the heater core and the guide wall and adapted to be opened and closed to control a generation amount of the secondary conditioned airflow in consort with the upstream damper. The downstream damper has a partition portion interposed between the first and second zones when the downstream damper is in a closed position.

The heater core has a downstream face from which the secondary conditioned airflow is discharged. The downstream damper includes a board-like cover portion for covering the downstream face of the heater core when the downstream damper is in the closed position. The cover portion is provided in an end thereof with the partition portion extending toward the guide wall, and includes a proximal end turnably supported in a vicinity of the downstream face.

According to a preferable aspect, the guide wall has an edge forming a downstream exit of the first zone in between the edge and an inner wall surface of the inner duct. The partition portion extends from the end of the cover portion to the edge of the guide wall, and has flexibility allowing a turning movement of the cover portion.

According to a non-claimed aspect, the guide wall has an edge forming a downstream exit of the first zone in between the edge and an inner wall surface of the inner duct. The downstream damper is formed of a partition plate including a proximal end turnably supported in a vicinity of an upstream inlet of the first zone and also including a distal end reaching to the edge of the guide wall. In the closed position, the partition plate is brought into contact to the edge of the guide wall at the end thereof, thereby indirectly closing the heater core and serving as the partition portion as well.

The object is also accomplished by an air conditioner according to claim 4. Therein, the heater core has one end portion forming an upstream inlet of the first zone in between the one end portion and an inner wall surface of the inner duct. The guide wall has an edge forming a downstream exit of the first zone in between the edge and the inner wall surface of the inner duct. The downstream damper includes a flexible sheet stretched from an other end portion of the heater core or the vicinity of the other end portion to the edge of the guide wall and disposed in an open position for opening the heater core, and a movable rod located between the flexible sheet and the guide wall when the flexible sheet is in the open position, and adapted to move to a vicinity of the one end portion of the heater core along with expansion and deformation of the flexible sheet such that a cover portion for closing the heater core is formed by a part of the flexible sheet and the partition portion is formed by the rest of the flexible sheet when the downstream damper is switched to the closed position.

According to a preferable aspect, the air-conditioning housing is substantially low-profile in a direction orthogonal to the inner duct, and has a length of 150 mm or less in the orthogonal direction of the air-conditioning housing.

According to a preferable aspect, the air-conditioning housing is installed in an occupant compartment of a construction machine.

According to the air conditioner of the present invention, when the downstream damper is in the closed position, the primary conditioned airflow that has bypassed the heater core is prevented by the partition portion from flowing into the second zone. In other words, the generation of the separated flow from part of the primary conditioned airflow is prevented. Therefore, during the maximum cooling, part of the primary conditioned airflow that has bypassed the heater core does not turn into the separated flow, so that there is no separated flow that increases circulation resistance of the inner duct. As a consequence, a wind amount of the primary conditioned airflow that is discharged from the air outlet is increased, which improves the cooling capacity.

### BRIEF DESCRIPTION OF THE DRAWINGS

FIG. 1 is a schematic construction view of an air conditioner, showing a heater core of an air-conditioning unit and a periphery of the heater core when upstream and downstream dampers are in an open position in section as viewed from the side;
FIG. 2 is a sectional view of the heater core of the air-conditioning unit of FIG. 1 and the periphery thereof in a state where the upstream and downstream dampers are in an open or half-open position;
FIG. 3 is a sectional view of an area extending from the heater core to an air outlet in the air-conditioning unit of FIG. 1 as viewed from above;
FIG. 4 is a sectional view showing from the side the heater core and the periphery thereof in the state where the upstream and downstream dampers are in the open position in an air-conditioning unit applied with a downstream damper of a second embodiment;
FIG. 5 is a sectional view of the heater core and the periphery thereof in a state where the downstream damper of FIG. 4 is in the open or closed position;
FIG. 6 is a sectional view of an area extending from the heater core to an air outlet in the air-conditioning unit of FIG. 1 as viewed from above;
FIG. 7 is a sectional view showing from the side the heater core and the periphery thereof in the state where the upstream and downstream dampers are in the open position in an air-conditioning unit applied with a downstream damper of a non-claimed third embodiment;
FIG. 8 is a sectional view of the heater core and the periphery thereof in a state where the downstream damper of FIG. 7 is in the open or half-open position;
FIG. 9 is a sectional view showing from the side the heater core and the periphery thereof in the stare where the upstream and downstream dampers are in the open position in the air-conditioning unit applied with the downstream damper of a fourth embodiment; and
FIG. 10 is a sectional view of the heater core and the periphery thereof in a state where the downstream damper of FIG. 9 is in the open or half-open position.

### BEST MODE OF CARRYING OUT THE INVENTION

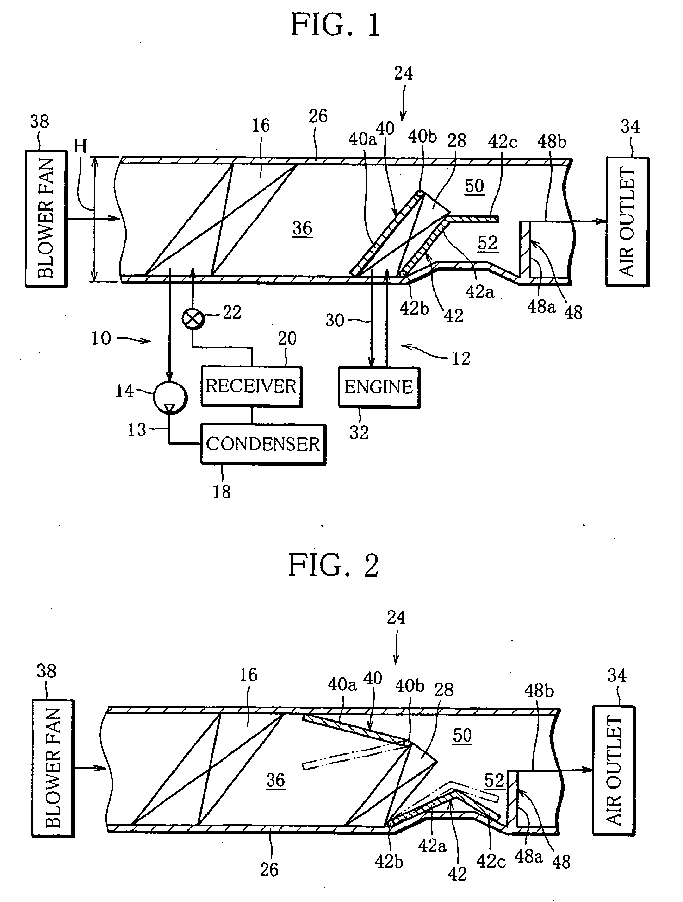

An air conditioner according to a first embodiment of the present invention is applied, for example, to a construction machine, and is provided with a refrigeration circuit 10 through which a refrigerant circulates and a heating circuit 12 through which hot water circulates as shown in FIG 1.

The refrigeration circuit 10 has a compressor 14 installed in an engine room of the construction machine. The compressor 14 is connected to an evaporator 16 through a reverse path of a refrigerant circulation line 13. A condenser 18, a receiver 20 and an expansion valve 22 are interposed in a forward path of the refrigerant circulation line 13.

The heating circuit 12 is provided with a heater core 28. The heater core 28 is connected to a cooling system of an engine 32 through a hot water circulation line 30.

The evaporator 16 of the refrigeration circuit 10 and the heater core 28 of the heating circuit 12 are both housed in an air-conditioning unit 24. The air-conditioning unit 24 is set in a driver's compartment, or cab, of the construction machine. Specifically, the air-conditioning unit 24 is provided with a unit housing 26. The unit housing 26 has prescribed height H so that it can be accommodated under a seat in the cab, for example, and has a box-like shape that is low-profile in a height direction thereof, that is, in a vertical direction as shown in FIG. 1. The housing 26 has an air inlet, not shown, and an air outlet 34. The air inlet and the air outlet 34 are connected to each other through an inner duct 36. The evaporator 16 and the heater core 28 are both disposed in the inner duct 36.

A blower fan 38 is set in the most upstream position of the inner duct 36. The blower fan 38 creates an airflow running from the air inlet to the air outlet 34.

The evaporator 16 is placed in the downstream of the blower fan 38 and occupies the entire duct cross sectional area of the inner duct 36. Accordingly, all the airflow running from the blower fan 38 passes the evaporator 16 to flow downstream. In this specification, the airflow that has passed the evaporator 16 is referred to as a primary conditioned airflow. If the refrigeration circuit 10 is operated, the primary conditioned airflow turns into a cold air that is refrigerated (conditioned) by the evaporator 16. Since the unit housing 26 is low-profile, the evaporator 16 is fixed in an oblique position such that its upper end is located downstream from its lower end.

The heater core 28 is disposed in the downstream of the evaporator 16 and partially occupies the duct cross sectional area of the inner duct 36. Concretely, an upper end portion of the heater core 28 and an upper wall of the housing 26 are separated from each other, and form an upstream inlet of the first zone as an after-mentioned bypass route. If the primary conditioned airflow further passes the heater core 28 while the heating circulation 12 is operated, the primary conditioned airflow is heated (conditioned) and turns into a secondary conditioned airflow. The heater core 28 is fixed in an oblique position in the same manner as the evaporator 16.

Airmix doors 40 and 42 is arranged in the immediate upstream and immediate downstream of the heater core 28, respectively. The airmix doors 40 and 42 are capable,of opening/closing an upstream face and downstream faces of the heater core 28 separately. Hereinafter, the upstream airmix door 40 is referred to as an upstream damper 40, and the downstream airmix door 42 as a downstream damper 42.

The upstream damper 40 comprises a board-like cover portion 40a. An upper end of the cover portion 40a is fixed to a rotary shaft 40b. The rotary shaft 40b is located near the upper end of the heater core 28. The upstream damper 40, namely the cover portion 40a, is turnably supported by side walls of the housing 26 through the rotary shaft 40b. The cover portion 40a is shifted between an open position and a closed position via an intermediate half-open position as the rotary shaft 40b is rotated by a servomotor, not shown.

Similarly to the upstream damper 40, the downstream damper 42 also comprises a board-like cover portion 42a. A lower end of the cover portion 42a is fixed to a rotary shaft 42b, and is turnably supported by side walls of the housing 26 by using the rotary shaft 42b. The rotary shaft 42b is placed near the lower end of the heater core 28. The cover portion 42a of the downstream damper 42 is shifted between an open position and a closed position via a half-open position as the rotary shaft 42b is rotated by a servomotor, not shown. The downstream damper 42 has a partition portion 42c that continues to the upper end of the cover portion 42a. This will be described later.

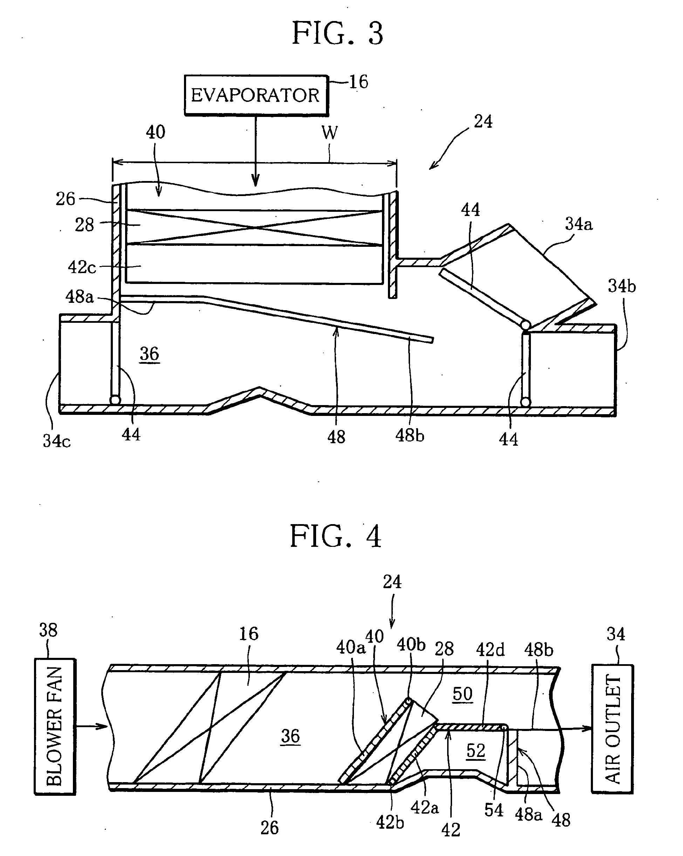

The housing 26, as shown in FIG. 3, has a FOOT air outlet 34a, a DEF air outlet 34b, and a VENT air outlet 34c serving as air outlets 34 in the downstream from the heater core 28. The air outlets 34 are formed to laterally protrude from a downstream end portion of the housing 26. The FOOT air outlet 34a and the DEF air outlet 34b are disposed adjacently to each other on an opposite side to the VENT air outlet 34c.

The air outlets 34 are connected with respective air ducts, not shown, which are set in the occupant compartment. Disposed in the immediate upstream of each of the air outlets 34 is a switching damper 44 for opening/closing the corresponding air outlet 34.

The unit housing 26 is low-profile in the height direction. Width W of a portion of the housing 26, in which the heater core 28 is installed, is larger than height H of this portion of the housing 26 (W > M).

Referring to FIG. 1 again, a guide wall 48 is set up in between the air outlets 34 and the heater core 28.

More specifically, as compared to the heater core 28, the height of the guide wall 48 is substantially equal to the height of an upper end of the downstream face of the heater core 28, and is substantially half of the internal height of the unit housing 26. Formed in between an upper edge of the guide wall 48 and the upper wall of the housing 26 is an opening that forms a downstream exit of the first zone 50. Referring to FIG. 3, the guide wall 48 has a parallel portion 48a stretching parallel to the heater core 28 from the side wall of the housing 26, which is located on the VENT air outlet 34c side. The length of the parallel portion 48a is smaller than the width of the heater core 28. In addition, the guide wall 48 has a slanting portion 48b obliquely continuing to the parallel portion 48a. The slanting portion 48b stretches toward the DEF air outlet 34b.

The air conditioner is operated on preset conditions (wind amount, wind direction, temperature) given by the driver through a control panel. During the maximum cooling, such as the time when the cab is rapidly refrigerated right after occupants get in the cab, the blower fan 38 creates airflow at a maximum flow rate. The upstream damper 40 and the downstream damper 42 are both arranged in the closed position, while the switching damper 44 for the VENT air outlet 34c is opened. Under these conditions, the primary conditioned airflow that has passed the evaporator 16 and been refrigerated passes through the bypass route over the heater core 28 and an opening located above the guide wall 48. The primary conditioned airflow is then blown into the cab through the air duct connected to the VENT air outlet 34c.

During the weak/medium cooling, heating or dehumidifying operation, the upstream damper 40 and the downstream damper 42 are located in the half-open or fully open position. At this moment, part or all of the primary conditioned airflow passes the heater core 28 to be heated, thereby turning into the secondary conditioned airflow. The secondary conditioned airflow is guided obliquely upward by the cover portion 42a of the downstream damper 42 and joins with the primary conditioned airflow when the downstream damper 42 is half-opened or flows downstream individually when the downstream damper 42 is fully open. The secondary conditioned airflow is subsequently blown out from the air outlets 34 whose switching dampers 44 are in the open position.

In other words, according to this air conditioner, since the upstream damper 40 and the downstream damper 42 cooperate with each other, the generation amounts of the primary conditioned airflow and the secondary conditioned airflow are controlled. The inner duct 36 is divided into the first zone 50 on the upper side and a second zone 52 on the lower side between the heater core 28 and the guide wall 48. The first zone 50 functions as the bypass route that allows a free flow of the primary conditioned airflow, and the second zone 52 as a flow channel for the secondary conditioned airflow. A boundary between the first zone 50 and the second zone 52 is defined by a line connecting the upper end of the heater core 28 and the upper edge of the guide wall 48.

In the air conditioner, the partition portion 42c of the downstream damper 42 has a board-like shape as shown in FIG. 1 and integrally continues to the upper end of the cover portion 42a. The partition portion 42c is slanted with respect to the cover portion 42a, and stretches toward the upper edge of the guide wall 48 along the above-mentioned boundary when the downstream damper 42 is in the closed position. That is to say, at this moment, the partition portion 42c is located in between the first zone 50 and the second zone 52.

Therefore, when the downstream damper 42 is in the closed position, the first conditioned airflow that has bypassed through the first zone 50 is guided by the partition portion 42c, so that the first conditioned airflow does not turn into a separated flow in the immediate downstream of the upper end portion of the heater core 28. The first conditioned airflow then becomes a smooth flow running toward the opening above the guide wall 48, that is, a downstream exit of the first zone 50, passes over the guide wall 48 and flows to the VENT air outlet 34c. This prevents the increase of circulation resistance of the inner duct 36, which is caused by the generation of the separated flow, and heightens the flow rate in the primary conditioned airflow running toward the VENT air outlet 34c. Consequently, the air conditioner increases the wind amount of the cold air that is blown out from the VENT air outlet 34c into the cab, thereby improving the cooling capacity required during the maximum cooling.

When the downstream damper 42 is in the half-open position and fully open position, the partition portion 42c is located in a lower position than the upper end of the cover portion 42a and does not block the flow of the secondary conditioned airflow. Therefore, the partition portion 42c never hampers the weak/medium cooling, heating or dehumidifying operation of the air conditioner.

The present invention is not limited to the first embodiment and may be modified in various ways. For example, the guide wall 48 may extend between both side walls of the unit housing 26 and may be formed only of the parallel portion having length that is equal to or more than the width of the heater core 28.

Although the height H of the unit housing 26 is not particularly limited, it is preferable that the height H be equal to or less than 150 mm if the unit housing 26 is installed in a small space such as the occupant compartment of the construction machine. If the height H of the unit housing 26 is equal to or less than 150 mm, and the duct cross sectional area of the inner duct 36 is small, the cooling capacity that is required during the maximum cooling is significantly enhanced by preventing the generation of the separated flow.

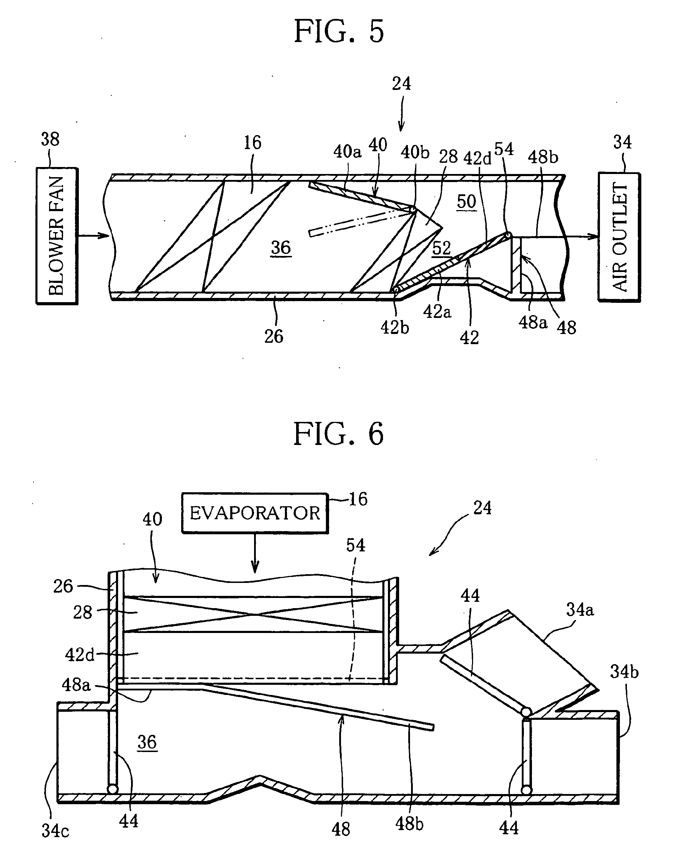

FIGS. 4 and 5 show a downstream damper 42 that is applied to an air conditioner of a second embodiment. The downstream damper 42 has a partition portion 42d that is made, for example, of a flexible rubber sheet, and a fixed rod 54 is fixed to a distal end of the partition portion 42d. The fixed rod 54 is fixed to an upper edge of the parallel portion 48a of the guide wall 48.

Referring to FIG. 6, the fixed rod 54 stretches parallel with the parallel portion 48a in between the side walls of the housing 26. In the case of this embodiment, when the downstream damper 42 is shifted from an open position to a closed position, the partition portion 42d is elongated along with a turning movement of a cover portion 42a.

When the downstream damper 42 is in the closed position, a second zone 52 is completely covered with the partition portion 42d, so that the bypassed primary conditioned airflow is entirely prevented from flowing around to reach the rear of the heater core 28 due to the generation of the separated flow. This further lessens circulation resistance of the inner duct 36, and further improves cooling capacity during the maximum cooling.

The distal end of the partition portion 42d may be directly connected to the upper edge of the guide wall 48, and fixing means thereof is not particularly limited. Material for the partition portion 42d is not particularly limited. A bellows-shaped metal sheet or bellowphragm sheet may be utilized.

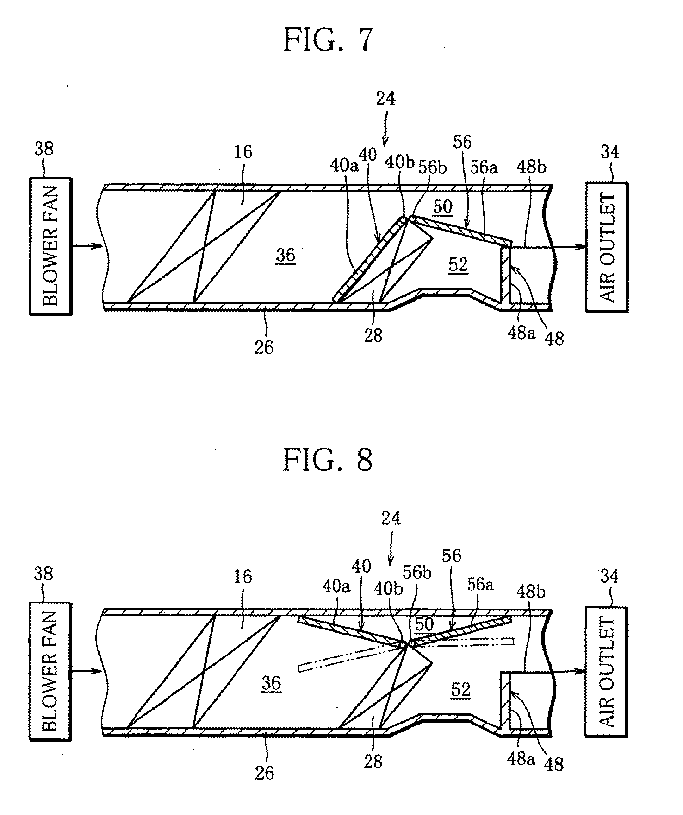

FIGS. 7 and 8 show a downstream damper 56 that is applied to an air conditioner of a non-claimed third embodiment. The downstream damper 56 is also formed of a board-like plate portion 56a. A rotary shaft 56b of the plate portion 56a is located near an upper portion of the heater core 28, that is, at the upstream inlet of the first zone 50. When the downstream damper 56 is in the closed position, a part of the distal end of the plate portion 56a is brought into contact with the upper edge of the parallel portion 48a of the guide wall 48 from above. At this moment, the plate portion 56 blocks the second zone 52 in consort with the guide wall 48 and simultaneously forms a partition portion that separates the first zone 50 and the second zone 52 from each other, thereby preventing the generation of the separated flow. In the case of the third embodiment, as in the case of the second embodiment, the second zone 52 is completely covered. It is then possible to entirely prevent the bypassed primary conditioned airflow from flowing around to reach the rear of the heater core 28 due to generation of the separated flow. Referring to FIG. 8, when the downstream damper 56 is in a half-open position shown by a chain double-dashed line or in a fully open position shown by a solid line, the end of the plate portion 56a is upwardly detached from the upper edge of the parallel portion 48a of the guide wall 48, and a downstream exit of the second zone 52 is formed between the upper edge of the guide wall 48 and the distal end of the plate portion 56a. When the downstream damper 56 is in the open position, the distal end thereof is in contact with the upper wall of the unit housing 26, so that a downstream exit of the first zone is blocked.

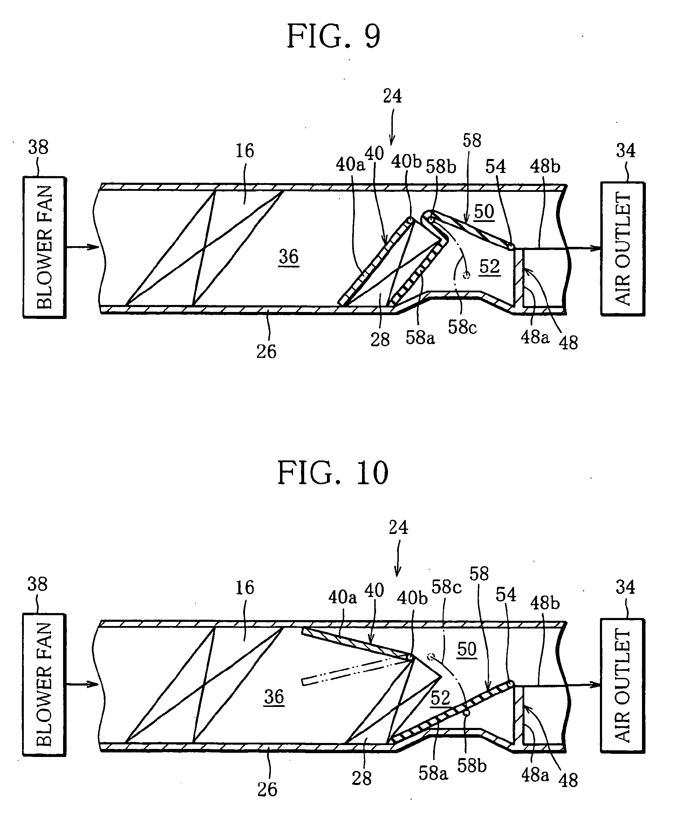

FIGS. 9 and 10 show a downstream damper 58 that is applied to an air conditioner of a fourth embodiment. The downstream damper 58 comprises, for example, of a rubber sheet 58a, and has flexibility. One end of the sheet 58a is fixed in the vicinity of the lower end of the heater core 28, while the other end thereof is fixed to the upper edge of the parallel portion 48a of the guide wall 48 through a fixed rod 54.

When the downstream damper 58 is in an open position, the sheet 58a is stretched substantially straight between the heater core 28 and the fixed rod 54. A switch from the open position to the closed position of the downstream damper 58 is made by a movable rod 58b located near an intermediate portion of the sheet 58a. The movable rod 58b extends parallel to both the heater core 28 and the parallel portion 48a of the guide wall 48. Both ends of the movable rod 58b are interfitted in guide grooves 58c formed in both the side walls of the housing 26, so that the movable rod 58b can move along the guide grooves 58c. If the movable rod 58b moves along the guide grooves 58c to the heater core 28 side, the intermediate portion of the sheet 58a is pulled by the movable rod 58c toward the vicinity of the upper end of the heater core 28. If the movable rod 58b is positioned in an end portion of the guide groove 58c, which is located on the heater core 28 side, a part of the sheet 58a forms a cover portion that covers the downstream face of the heater core 28, and simultaneously the rest of the sheet 58a is wrapped around the movable rod 58b immediately above the heater core 28, and forming a partition portion that is stretched from the movable rod 58b to the parallel portion 48a of the guide wall 48.

Lastly, the air conditioner of the present invention is applicable not only to a construction machine but also to a vehicle.

## Claims

1. Air conditioner comprising:
an air-conditioning housing (26) including an inner duct (36) and housing an evaporator (16) for making air in the inner duct (36) into a primary conditioned airflow flowing downstream;
a heater core (28) so disposed as to partially occupy a duct cross sectional area of the inner duct (36) in the downstream of the evaporator (16) for producing a secondary conditioned airflow obtained by heating the primary conditioned airflow in the inner duct (36) along with passing of the primary conditioned airflow and allowing the primary conditioned airflow to bypass;
an upstream damper (40) set in an immediate upstream of the heater core (28) and adapted to be opened and closed to control a passing rate of the primary conditioned airflow with respect to the heater core (28);
a guide wall (48) arranged in the downstream of the heater core (28) and forming a first zone (50) in a downstream area of the heater core (28), the first zone (50) allowing free passing of the primary conditioned airflow having bypassed the heater core (28), and a second zone (52) in between the guide wall (48) and the heater core (28); and
a downstream damper (42) disposed in between the heater core (28) and the guide wall (48) and adapted to be opened and closed to control a generation amount of the secondary conditioned airflow in consort with the upstream damper (40),
wherein:
the downstream damper (42) has a partition portion (42c) interposed between the first and second zones (50, 52) when the downstream damper (42) is in a closed position;
**characterized in that**
the heater core (28) has a downstream face from which the secondary conditioned airflow is discharged; and
the downstream damper (42) includes a board-like cover portion (42a) for covering the downstream face of the heater core (28) when the downstream damper (42) is in the closed position, the cover portion (42a) being provided in an end thereof with the partition portion (42c) extending toward the guide wall (48) and including a proximal end turnably supported in a vicinity of the downstream face.

2. The air conditioner according to claim 1, wherein:
the guide wall (48) has an edge forming a downstream exit of the first zone (50) in between the edge and an inner wall surface of the inner duct (36); and
the partition portion (42c) extends from the end of the cover portion (42a) to the edge of the guide wall (48), and has flexibility allowing a turning movement of the cover portion (42a).

3. Air conditioner comprising:
an air-conditioning housing (26) including an inner duct (36) and housing an evaporator (16) for making air in the inner duct (36) into a primary conditioned airflow flowing downstream;
a heater core (28) so disposed as to partially occupy a duct cross sectional area of the inner duct (36) in the downstream of the evaporator (16) for producing a secondary conditioned airflow obtained by heating the primary conditioned airflow in the inner duct (36) along with passing of the primary conditioned airflow and allowing the primary conditioned airflow to bypass;
an upstream damper (40) set in an immediate upstream of the heater core (28) and adapted to be opened and closed to control a passing rate of the primary conditioned airflow with respect to the heater core (28);
a guide wall (48) arranged in the downstream of the heater core (28) and forming a first zone (50) in a downstream area of the heater core (28), the first zone (50) allowing free passing of the primary conditioned airflow having bypassed the heater core (28), and a second zone (52) in between the guide wall (48) and the heater core (28); and
a downstream damper (58) disposed in between the heater core (28) and the guide wall (48) and adapted to be opened and closed to control a generation amount of the secondary conditioned airflow in consort with the upstream damper (40),
wherein:
the downstream damper (58) has a partition portion (42c) interposed between the first and second zones (50, 52) when the downstream damper (58) is in a closed position;
**characterized in that**
the heater core (28) has one end portion forming an upstream inlet of the first zone (50) in between the one end portion and an inner wall surface of the inner duct (36);
the guide wall (48) has an edge forming a downstream exit of the first zone (50) in between the edge and the inner wall surface of the inner duct (36); and
the downstream damper (58) includes:
a flexible sheet (58a) stretched from an other end portion of the heater core (28) or a vicinity of the other end portion to the edge of the guide wall (48) and adapted to be disposed in an open position for opening the heater core (28); and
a movable rod (58b) located between the flexible sheet (58a) and the guide wall (48) when the flexible sheet (58a) is in the open position and adapted to move to a vicinity of the one end portion of the heater core (28) along with expansion and deformation of the flexible sheet (58a) such that a cover portion (58a) for closing the heater core (28) is formed by a part of the flexible sheet (58a) and a partition portion is formed by the rest of the flexible sheet (58a) when the downstream damper (58) is switched to the closed position.

4. The air conditioner according to claim 1 or 3, wherein:
the air-conditioning housing (26) is formed into a box shape low-profile in a direction orthogonal to the inner duct (36); and
the air-conditioning housing (26) has a length (L) of 150 mm or less in the orthogonal direction.

5. The air conditioner according to claim 4, wherein:
the air-conditioning housing (26) is installed in an occupant compartment of a construction machine.

## Patentansprüche

1. Klimaanlage mit:
einem Klimaanlagengehäuse (26) mit einer inneren Leitung (36), und die einen Verdampfer (16) aufnimmt zum Umwandeln von Luft in der inneren Leitung (36) in einen primären klimatisierten Luftstrom, der stromabwärts strömt;
einem Heizerkern (28), der so vorgesehen ist, dass er teilweise eine Leitungsquerschnittsfläche der inneren Leitung (36) stromabwärts von dem Verdampfer (16) zum Erzeugen eines sekundären klimatisierten Luftstroms belegt, der erhalten wird durch Erwärmen des primären klimatisierten Luftstroms in der inneren Leitung (36), zusammen mit dem Durchgehen des primären klimatisierten Luftstroms und Ermöglichen für den primären klimatisierten Luftstrom zu umgehen;
einer stromaufwärtigen Luftklappe (40), die in der Mitte stromaufwärts von dem Heizerkern (38) gesetzt ist und angepasst ist, geöffnet und geschlossen zu werden zum Steuern einer Durchgangsrate des primären klimatisierten Luftstroms in Bezug auf den Heizerkern (28);
einer Führungswand (48), die stromaufwärts von dem Heizerkern (28) angeordnet ist und eine erste Zone (50) in einem stromabwärtigen Gebiet des Heizerkerns (28), wobei die erste Zone (50) den freien Durchgang des primären klimatisierten Luftstroms, der den Heizerkern (28) umgangen hat, ermöglicht, und eine zweite Zone (52) zwischen der Führungswand (48) und dem Heizerkern (28) bildet; und
einer stromabwärtigen Luftklappe (42), die zwischen dem Heizerkern (28) und der Führungswand (48) vorgesehen ist und angepasst ist, geöffnet und geschlossen zu werden zum Steuern eines Erzeugungsbetrags des sekundären klimatisierten Luftstroms zusammen mit der stromaufwärtigen Luftklappe (40),
worin die stromabwärtige Luftklappe (42) einen Unterteilungsabschnitt (42c) aufweist, der zwischen der ersten und der zweiten Zone (50, 52), wenn sich die stromabwärtige Luftklappe (42) in einer geschlossenen Position befindet, eingefügt ist;
**dadurch gekennzeichnet, dass**
der Heizerkern (28) eine stromabwärtige Fläche aufweist, von der der sekundäre klimatisierte Luftstrom abgegeben wird; und
die stromabwärtige Luftklappe (42) einen plattenartigen Abdeckabschnitt (42a) zum Bedecken der stromabwärtigen Fläche des Heizerkerns (28), wenn sich die stromabwärtige Luftklappe (42) in der geschlossenen Position befindet, enthält, wobei der Abdeckabschnitt (42a) an einem Ende davon vorgesehen ist, wobei der Unterteilungsabschnitt (42c) sich zu der Führungswand (48) erstreckt und ein nahes Ende enthält, das drehbar in einer Nähe der stromabwärtigen Fläche gelagert ist.

2. Klimaanlage nach Anspruch 1,
bei der die Führungswand (48) eine Kante aufweist, die einen stromabwärtigen Ausgang der ersten Zone (50) zwischen der Kante und einer inneren Wandoberfläche der inneren Leitung (36) bildet; und
der Unterteilungsabschnitt (42c) sich von dem Ende des Abdeckabschnitts (42a) zu der Kante der Führungswand (48) erstreckt und Flexibilität aufweist, die eine Drehbewegung des Abdeckabschnitts (42a) ermöglicht.

3. Klimaanlage mit:
einem Klimaanlagengehäuse (26) mit einer inneren Leitung (36), und die einen Verdampfer (16) aufnimmt zum Umwandeln von Luft in der inneren Leitung (36) in einen primären klimatisierten Luftstrom, der stromabwärts strömt;
einem Heizerkern (28), der so vorgesehen ist, dass er teilweise eine Leitungsquerschnittsfläche der inneren Leitung (36) stromabwärts von dem Verdampfer (16) zum Erzeugen eines sekundären klimatisierten Luftstroms belegt, der durch Erwärmen des primären klimatisierten Luftstroms in der inneren Leitung (36) erhalten wird und Ermöglichen des primären klimatisierten Luftstroms zu umgehen;
einer stromaufwärtigen Luftklappe (40), die in der Mitte stromaufwärts von dem Heizerkern (28) gesetzt ist und angepasst ist, geöffnet und geschlossen zu werden zum Steuern einer Durchgangsrate des primären klimatisierten Luftstroms in Bezug auf den Heizerkern (28);
einer Führungswand (48), die stromabwärts von dem Heizerkern (28) angeordnet ist und eine erste Zone (50) in einem stromabwärtigen Gebiet des Heizerkerns (28), wobei die erste Zone (50) freien Durchgang des primären klimatisierten Luftstroms ermöglicht, der den Heizerkern (28) umgangen hat, und
eine zweite Zone (52) zwischen der Führungswand (48) und dem Heizerkern (28) bildet; und
einer stromabwärtigen Luftklappe (58), die zwischen dem Heizerkern (28) und der Führungswand (48) vorgesehen ist und angepasst ist, geöffnet und geschlossen zu werden zum Steuern eines Erzeugungsbetrags des sekundären klimatisierten Luftstroms, zusammen mit der stromaufwärtigen Luftklappe (40),
worin die stromabwärtige Luftklappe (58) einen Unterteilungsabschnitt (42c) aufweist, der zwischen der ersten und der zweiten Zone (50, 52), wenn sich die stromabwärtige Luftklappe (58) in einer geschlossenen Position befindet, eingefügt ist;
**dadurch gekennzeichnet, dass**
der Heizerkern (28) einen Endabschnitt aufweist, der einen stromaufwärtigen Einlass in der ersten Zone (50) zwischen dem einen Endabschnitt und einer inneren Wandoberfläche der inneren Leitung (36) bildet;
die Führungswand (48) eine Kante aufweist, die einen stromabwärtigen Ausgang der ersten Zone (50) zwischen der Kante und der inneren Wandoberfläche der inneren Leitung (36) bildet; und
die stromabwärtige Luftklappe (58) aufweist:
eine flexible Platte (58a), die von einem anderen Endabschnitt des Heizerkerns (28) oder einer Nähe des anderen Endabschnitts zu der Kante der Führungswand (48) sich streckt und angepasst ist, in einer offenen Position zum Öffnen des Heizerkerns (28) vorgesehen zu sein; und
eine bewegbare Stange (58b), die zwischen der flexiblen Platte (58a) und der Führungswand (48), wenn sich die flexible Platte (58a) in der offenen Position befindet, angeordnet ist und angepasst ist, sich zu einer Nähe des einen Endabschnitts des Heizerkerns (28) zusammen mit der Expansion und Verformung der flexiblen Platte (58a) zu bewegen, derart, dass ein Abdeckabschnitt (58a) zum Schließen des Heizerkerns (28) durch einen Teil der flexiblen Platte (58a) gebildet ist und ein Unterteilungsabschnitt durch den Rest der flexiblen Platte (58a) gebildet ist, wenn die stromabwärtige Luftklappe (58) zu der geschlossenen Position geschaltet ist.

4. Klimaanlage nach Anspruch 1 oder 3,
bei der das Klimaanlagengehäuse (26) in eine Kastenform mit niedrigem Profil in einer Richtung senkrecht zu der inneren Leitung (36) gebildet ist; und
das Klimaanlagengehäuse (26) eine Länge (L) von 150 mm oder weniger in der senkrechten Richtung aufweist.

5. Klimaanlage nach Anspruch 4,
bei der das Klimaanlagengehäuse (26) in einem Bedienerraum einer Baumaschine eingebaut ist.

## Revendications

1. Climatiseur comprenant :
un boîtier de climatisation (26) contenant un conduit interne (36) et accueillant un évaporateur (16) amenant l'air qui se trouve dans le conduit interne (36) en débit d'air conditionné primaire à circuler en aval ;
un radiateur de chauffage (28) disposé de sorte à occuper partiellement une superficie en section transversale du conduit interne (36) en aval de l'évaporateur (16) pour produire un débit d'air conditionné secondaire obtenu en chauffant le débit d'air conditionné primaire dans le conduit interne (36) avec le passage du débit d'air conditionné primaire et en permettant une opération de contournement par le débit d'air conditionné primaire ;
un amortisseur amont (40) placé immédiatement en amont du radiateur de chauffage (28) et adapté pour être ouvert et fermé afin de commander une vitesse de passage du débit d'air conditionné primaire par rapport au radiateur de chauffage (28) ;
une paroi de guidage (48) agencée en aval du radiateur de chauffage (28) et formant une première région (50) dans une région en aval du radiateur de chauffage (28), la première région (50) permettant le passage libre du débit d'air conditionné primaire ayant contourné le radiateur de chauffage (28), et une deuxième région (52) entre la paroi de guidage (48) et le radiateur de chauffage (28) ; et
un amortisseur aval (42) disposé entre le radiateur de chauffage (28) et la paroi de guidage (48) et adapté pour être ouvert et fermé afin de commander une quantité de génération du débit d'air conditionné secondaire de concert avec l'amortisseur amont (40), où :
l'amortisseur aval (42) possède une partie de séparation (42c) interposée entre les première et deuxième régions (50, 52) lorsque l'amortisseur aval (42) se trouve dans une position fermée ;
**caractérisé en ce que**
le radiateur de chauffage (28) possède une face aval depuis laquelle le débit d'air conditionné secondaire est déchargé ; et
l'amortisseur aval (42) comprend une partie de couverture (42a) en forme de panneau pour couvrir la face aval du radiateur de chauffage (28) lorsque l'amortisseur aval (42) se trouve dans la position fermée, la partie de couverture (42a) étant prévue de sorte qu'à une extrémité de cette dernière la partie de séparation (42c) s'étend vers la paroi de guidage (48) et comprend une extrémité proximale soutenue de manière tubulaire à proximité de la face aval.

2. Climatiseur selon la revendication 1, dans lequel :
la paroi de guidage (48) possède un bord formant une sortie en aval de la première région (50) entre le bord et une surface de paroi interne du conduit interne (36) ; et
la partie séparation (42c) s'étend de l'extrémité de la partie de couverture (42a) au bord de la paroi de guidage (48), et possède une flexibilité permettant un mouvement de virage de la partie de couverture (42a).

3. Climatiseur comprenant :
un boîtier de climatisation (26) contenant un conduit interne (36) et accueillant un évaporateur (16) amenant l'air qui se trouve dans le conduit interne (36) en débit d'air conditionné primaire à circuler en aval ;
un radiateur de chauffage (28) disposé de sorte à occuper partiellement une zone en coupe transversale du conduit interne (36) en aval de l'évaporateur (16) pour produire un débit d'air conditionné secondaire obtenu en chauffant le débit d'air conditionné primaire dans le conduit interne (36) avec le passage du débit d'air conditionné primaire et en permettant une opération de contournement par le débit d'air conditionné primaire ;
un amortisseur amont (40) placé immédiatement en amont du radiateur de chauffage (28) et adapté pour être ouvert et fermé afin de commander une vitesse de passage du débit d'air conditionné primaire par rapport au radiateur de chauffage (28) ;
une paroi de guidage (48) agencée en aval du radiateur de chauffage (28) et formant une première région (50) dans une région en aval du radiateur de chauffage (28), la première région (50) permettant le passage libre du débit d'ait conditionné primaire ayant contourné le radiateur de chauffage (28), et une deuxième région (52) entre la paroi de guidage (48) et le radiateur de chauffage (28) ; et
un amortisseur aval (58) disposé entre le radiateur de chauffage (28) et la paroi de guidage (48) et adapté pour être ouvert et fermé afin de commander une quantité de génération du début d'air conditionné secondaire de concert avec l'amortisseur amont (40), où :
l'amortisseur aval (58) possède une partie de séparation (42c) interposée entre les première et deuxième régions (50, 52) lorsque l'amortisseur aval (58) se trouve dans une position fermée ;
**caractérisé en ce que**
le radiateur de chauffage (28) possède une partie d'extrémité formant une entrée amont de la première région (50) entre la partie d'extrémité et une surface de la paroi interne du conduit interne (36) ;
la paroi de guidage (48) possède un bord formant une sortie aval de la première région (50) entre le bord et la surface de la paroi interne du conduit interne (36) ; et
l'amortisseur en aval (58) comporte :
une feuille flexible (58a) étirée d'une autre partie d'extrémité du radiateur de chauffage (28) ou à proximité de l'autre partie d'extrémité au bord de la paroi de guidage (48) et adaptée pour être disposée dans une position ouverte pour ouvrir le radiateur de chauffage (28) ; et
une tige mobile (58b) située entre la feuille flexible (58a) et la paroi de guidage (48) lorsque la feuille flexible (58a) se trouve dans la position ouverte et adaptée pour se déplacer à proximité de la partie d'extrémité du radiateur de chauffage (28) avec l'expansion et la déformation de la feuille flexible (58a) de sorte qu'une partie de couverture (58a) pour fermer le radiateur de chauffage (28) soit formée par une partie de la feuille flexible (58a) et qu'une partie de séparation soit formée par le reste de la feuille flexible (58a) lorsque l'amortisseur aval (58) est déplacé vers la position fermée.

4. Climatiseur selon la revendication 1 ou 3, dans lequel :
le boîtier de climatisation (26) est formé en un profil bas en forme de boîte dans une direction orthogonale au conduit interne (36) ; et
le boîtier de climatisation (26) a une longueur (L) de 150 mm ou moins dans la direction orthogonale.

5. Climatiseur selon la revendication 4, dans lequel :
le boîtier de climatisation (26) est installé dans un compartiment passager d'une machine de construction.
